# EUROPEAN PATENT APPLICATION

(11) **EP 4 716 044 A1**
(43) Date of publication of application: **25.03.2026**
(21) Application number: 25200600.2
(22) Date of filing: 05.09.2025
(51) Int. Cl.: H02H 3/20, H02H 3/087

(54) **PROTECTION CIRCUIT**

(30) Priority: 18.09.2024 FR 2409912
(71) Applicant: STMicroelectronics International N.V., 1228 Plan-les-Ouates, Geneva (CH)
(72) Inventor: SIMONNET, Jean-Michel, 37270 VERETZ (FR); ORY, Olivier, 37100 Tours (FR)
(74) Representative: Cabinet Beaumont

(57) **Abstract**

The present disclosure relates to a protection circuit (100), comprising: at least one transistor (102) having one first conduction node connected to a first node (N1) and one second conduction node connected to a second node (N2), the first node (N1) being configured to be connected to a power source (140) referenced to ground, and the second node (N2) being configured to be coupled to a load (130) referenced to ground; one driver circuit (160) coupling a control node (NG) of said at least one transistor to ground, and being configured to deactivate said at least one transistor (102) when an overvoltage or an overcurrent occurs; at least one first transient voltage suppressor diode (116) having its anode connected to a third node (N3) and its cathode coupled to the first node (N1); at least one second diode (120) having its anode connected to the third node (N3) and its cathode connected to the controlling node of said at least one transistor (102); a controllable rectifying arrangement coupling the second node (N2) to ground; and a third diode (150) having its cathode connected to a controlling node of the rectifying arrangement.

## Description

### Technical field

The present disclosure relates generally to the domain of power electronics and more particularly concerns protection circuits adapted to the protection against over-voltages or over-currents.

### Background art

Nowadays, it is useful to equip electronic systems and devices of protection circuits against over-voltages or over-currents. For example, in systems operating with high voltages over hundreds of volts, wirings can store an energy that causes over-voltages, important current variations or over-currents cut-off. This energy has to be dissipated without damage for the components.

### Summary of Invention

There is a need to provide protection circuits with improved energy dissipation at reasonable costs.

One embodiment addresses all or some of the drawbacks of known protection devices.

One embodiment provides a protection circuit, comprising:
- at least one transistor having one first conduction node connected to a first node and one second conduction node connected to a second node, the first node being configured to be connected to a power source referenced to ground, and the second node being configured to be coupled to a load referenced to ground;
- one driver circuit coupling a control node of said at least one transistor to ground, and being configured to deactivate said at least one transistor when an overvoltage or an overcurrent occurs;
- at least one first transient voltage suppressor diode having its anode connected to a third node and its cathode coupled to the first node;
- at least one second diode having its anode connected to the third node and its cathode connected to the controlling node of said at least one transistor;
- a controllable rectifying arrangement coupling the second node to ground; and
- a third diode having its cathode connected to a controlling node of the rectifying arrangement.

According to an embodiment, the controllable rectifying arrangement is made of at least one thyristor.

According to an embodiment, the controllable rectifying arrangement is made of at least one triac in series with at least one reversed-biased diode.

According to an embodiment, the third diode has its anode coupled to the third node.

According to an embodiment, the protection circuit comprises at least one second transient voltage suppressor diode having its anode connected to the anode of the third diode.

According to an embodiment, the protection circuit comprises at least one second transient voltage suppressor diode, the anode of the third diode being connected to the first transient voltage suppressor diode or to said second transient voltage suppressor diode.

According to an embodiment, said at least one second transient voltage suppressor diode has its cathode connected to the first node.

According to an embodiment, the avalanche voltage of the first transient voltage suppressor diode is lower than the avalanche voltage of the second transient voltage suppressor diode.

According to an embodiment, said at least one second transient voltage suppressor diode (216) has its cathode connected to ground.

According to an embodiment, the protection circuit comprises a plurality of transistors having each:
- one conduction node connected to the first node; and
- one conduction node connected to the second node; the controlling nodes of the transistors of the plurality being coupled together.

According to an embodiment, the protection circuit further comprises a plurality of second diodes having each their anode connected to the third node and their cathode connected to the respective control node of the transistors of the plurality.

According to an embodiment, said at least one transistor or the plurality of transistors are of the MOSFET or IGBT type.

According to an embodiment, said first or second transient voltage suppressor diodes comprise two transient voltage suppressor diodes in series.

According to an embodiment, the avalanche voltage of the first transient voltage suppressor diode is superior to the power supply voltage.

According to an embodiment, the protection circuit comprises several transistors having each one first conduction node connected to the first node and one second conduction node connected to the second node;
said driver circuit being configured to deactivate every of said transistors when an overvoltage or an overcurrent occurs.

An embodiment provides a power conversion circuit comprising:
- a power source referenced to ground;
- a load referenced to ground;
- the protection circuit as disclosed, wherein the first node of the protection circuit is connected to the power source and the second node of the protection circuit is connected to the load.

An embodiment provides a vehicle comprising:
- a power source referenced to ground;
- a load referenced to ground;
- the protection circuit as disclosed, wherein the first node of the protection circuit is connected to the power source and the second node of the protection circuit is connected to the load.

According to an embodiment, the load is a battery to charge.

An embodiment provides a method of using the protection circuit as disclosed, comprising the use of the controllable rectifying arrangement and the transient voltage suppressor diode to dissipate energy when an over-voltage or over-current occurs.

### Brief description of drawings

The foregoing features and advantages, as well as others, will be described in detail in the following description of specific embodiments given by way of illustration and not limitation with reference to the accompanying drawings, in which:
Figure 1 represents an embodiment of a protection circuit;
Figure 2 represents an embodiment of a protection circuit;
Figure 3 represents an embodiment of a protection circuit; and
Figure 4 represents an embodiment of a protection circuit.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 % or 10°, and preferably within 5 % or 5°.

Numerous power applications use power converters DC-DC or AC-DC to supply a load or to charge a battery for example. In a case of a short-circuit or over-current, a switch, also called e-breaker and which can be a MOSFET or an IGBT transistor for example, is controlled to open the circuit in order to protect the other components. Due to parasitic harness inductance of the wiring or to an inductive load, an over-voltage or an over-current can be generated across the transistor and exceed its absolute maximum rating, thus leading to a destruction or degradation.

A solution consists in an active clamping with a transient voltage suppressor diode between the drain and the gate (case of MOSFET) or between collector and gate (case of IGBT). During active clamping, the power dissipation is split between the MOSFET or IGBT transistor and the transient voltage suppressor diode. However, in case of high working voltage and high current turn-off, the power dissipated through the transient voltage suppressor diode and the transistor can be too high. Different solutions can be applied to limit this dissipation.

To limit power losses through a transient voltage suppressor diode, a first solution could consist in adding a resistance in series. This solution leads to a higher clamping voltage and may not be sufficient to limit the dissipated power. The energy can also be dissipated through the printed circuit board on which the transistor is soldered. Nevertheless, the cost and area involved are too important. Another solution could consist in adding several transient voltage suppressor diodes which adds costs and leads to dispersion in temperature and voltage breakdown values. In any case, the use of one or several transient voltage suppressor diodes does not solve the transistor dissipation issue.

Another solution could be the use of a free-wheeling diode. Nevertheless, this last solution cannot be directly implemented in the case where the load is a battery since reverse battery has to be envisaged. As a drawback, in case of a very high turn-off current, a delay can appear before the free-wheeling diode is fully conducting, which leads to a too high voltage peak through the transistor.

To limit power losses through the transistor, a solution could be to increase the active surface of the transistor or increase the number of transistors. A larger heatsink could also be envisaged. Nevertheless, these solutions consume area and are costly.

In order to address these drawbacks, the embodiments provided describe a protection circuit, comprising:
- at least one transistor having one first conduction node connected to a first node and one second conduction node connected to a second node, the first node being configured to be connected to a power source referenced to ground, and the second node being configured to be connected to a load referenced to ground;
- one driver circuit coupling a control node of said at least one transistor to ground, and being configured to deactivate said at least one transistor when an over-voltage or an over-current occurs;
- at least one first transient voltage suppressor diode having its anode connected to a third node and its cathode connected to the first node;
- at least one second diode having its anode connected to the third node and its cathode connected to the control node of said at least one transistor;
- a controllable rectifying arrangement, coupling the second node to ground; and
- a third diode having its cathode connected to the controlling node of the controllable rectifying arrangement.

The controllable rectifying arrangement is made of at least one thyristor, or of at least one triac in series with at least a reversed biased diode.

This solution allows to clamp quickly the over-voltage in a first step with the transient voltage suppressor diode while the thyristor more slowly activates to create a free-wheeling loop dissipating in the wiring harness inductance. Then the energy is bypassed by the thyristor full latch-up which creates the discharging free-wheeling loop with the parasitic inductance of the wires or of the load. The remaining voltage is then low and the circuit to protect is safe.

An advantage is that a low clamping occurs across the transistor during turn-off. Another advantage is that a low energy is dissipated through the transistor and the transient voltage suppressor diode during turn-off.

The described embodiments allow to keep the number of transistors or transistors size low in order to insure the transistor energy evacuation.

Additionally, as this solution leads to a lower internal heating by bypassing the energy evacuation, the dispersion in the components due to self-heating temperature is lowered.

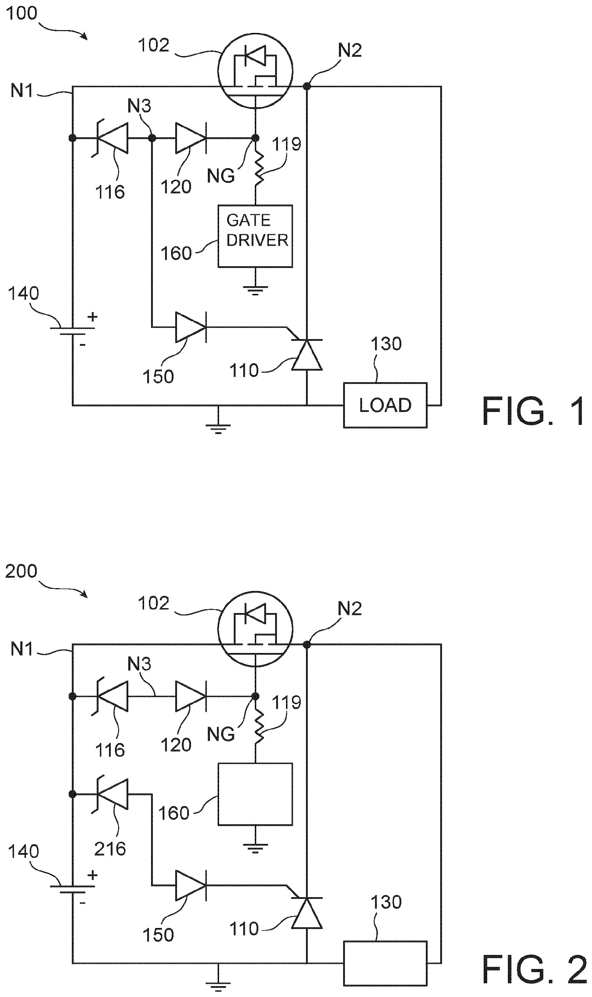

Figure 1 represents a first embodiment of a protection circuit 100. More particularly, the protection circuit 100 is a protection circuit against over-voltage appearing after a protection against an over-intensity otherwise said an over-current.

In the represented example, the protection circuit 100 comprises at least one transistor 102 which is for example a MOSFET or an IGBT transistor. The transistor 102 has one first conduction node coupled, preferably connected, to a first node N1 and one second conduction node coupled, preferably connected, to a second node N2. The first node is configured to be coupled, preferably connected, to a power source 140 referenced to ground. In an example, the power source can be a battery. The second node N2 is configured to be coupled, preferably connected, to a load 130 (LOAD) referenced to ground.

In the represented example, the protection circuit 100 also comprises one driver circuit 160 (Gate driver) coupling a control node NG of the transistor 102 to ground, for example via a resistor 119 in series. The driver circuit 160 is configured to deactivate the transistor 102 when an over-voltage or an over-current occurs. In an example, the driver circuit 160 applies a null or negative voltage to the MOSFET transistor controlling node to open it. The driver circuit comprises for example a shunt resistance in series with the load and when a voltage difference at the shunt resistance reaches a threshold then the transistor is deactivated.

In the represented example, the protection circuit 100 further comprises at least one transient voltage suppressor diode (TVS) 116 having its anode coupled, preferably connected, to a third node N3 and its cathode coupled, preferably connected, to the first node N1. In an example, the TVS 116 is formed with two or more TVS in series in order to obtain a larger avalanche voltage. In the Figures, the transient voltage suppressor diodes are represented with the symbol of a Zener diode. The TVS 116 is for example adapted to withstand, between its pins, a voltage generated by the power source 140.

In an example, the avalanche voltage of the TVS 116 is superior to the power source voltage.

The use of TVS can be preferable over the use of a Zener diode as it has higher voltage breakdown capacities.

In the represented Figure 1, the protection circuit 100 comprises, in addition, at least one diode 120 having its anode coupled, preferably connected, to the third node N3 and its cathode connected to the control node NG of the transistor 102. The diode 120 has for example an avalanche voltage greater than the gate voltage present at node NG. In other terms, the inverse voltage of the diode 120 is greater than the voltage present at node NG which can reach over 22V. The diode 120 prevents a current to go through the TVS 116 when a positive voltage is applied on node NG to turn the transistor 102 on.

In the represented example, the protection circuit 100 comprises at least one thyristor 110 (cathode-gated thyristor) coupling the second node N2 to ground. In this example, a diode 150 has its cathode connected to the controlling node of the thyristor 110 and its anode coupled, preferably connected, to the third node N3. The diode 150 allows to equilibrate voltages and if a battery is used as a load, then the reverse battery case is avoided.

A thyristor, also known as a silicon-controlled rectifier (SCR), is a bipolar power device with a gate, i.e. a controlling node, driven by a current level. The main current flows from anode to cathode when gate current is high enough and forbid the current circulation in the other way. The thyristor remains open if no current flows in its gate or controlling node.

In a non-illustrated example, the thyristor is replaced by a triac, coupling the second node N2 to ground. In this case the controlling node of the triac is connected to the cathode of the diode 150 and a reversed-biased diode is coupled, preferably connected, in series with the triac to forbid current conduction from N2 to ground (the cathode of the diode being directed to node N2).

The thyristor 110, or the triac in series with the reversed biased diode, forms the rectifying arrangement, controllable through the gate of the thyristor or the gate of the triac.

The described example refers to a thyristor forming the controllable rectifying arrangement but should be understood that, in each and all embodiments, this thyristor can be replaced by a triac in series with a reversed-biased diode.

In operation, when an over-voltage, or over-currents ranging over 1000 A up to 2500 A, happen through the transistor 102, the driver circuit 160 opens the transistor 102. With very high voltages, for example over 500V such as 900V, the harness inductance of the wires or the inductance of the load can still add an additional over-voltage to the protection circuit which goes in addition to the power source voltage. In a first period, this over-voltage becomes high enough, above the avalanche voltage, to render the TVS 116 conducting which leads to the suppression of the over-voltage in less than 0.1 µs, for example 1 ns, but also to the reactivation of the transistor and the activation of the thyristor 110 (or the triac). The full latch-up of the thyristor (or the triac) takes a longer time than the conducting state of the TVS, therefore the TVS 116 dissipates rapidly, in the first step, a part of the energy and lowers the over-voltage when reaching its avalanche voltage. The voltage applied on the control node is then lowered and the transistor is open again. In the meantime, when the thyristor (or the triac) becomes fully latched-up, it creates a free-wheeling loop discharging the rest of the energy through the harness inductance of the wires. The thyristor (or the triac) remains active until the current is low even the voltage across the TVS becomes again inferior to their avalanche voltage. The thyristor (or the triac) remains active even not controlled anymore until its crossing current becomes small enough (also called hold current), for example lower than a few dozens of mA. In other words, during the active clamp protection, the TVS 116 becomes conducting when its avalanche voltage is reached which renders the transistor 102 to be partially conducting again. Consequently, the overvoltage across TVS 116 decreases below its avalanche voltage and, when this voltage decreases enough, the transistor 102 becomes again blocked which in turns recreates the overvoltage leading to the conduction of TVS 116 and the whole process described above is repeated.

This architecture combining a TVS between the controlling node and the first conduction node of the transistor, with a free-wheeling thyristor loop, allows a fast response to dissipate energy then the rest of the energy is dissipated, without danger, in the free-wheel loop. The clamping voltage remains thus lower than the absolute maximum rating of the transistor and the number of transistor necessary remains low.

In an example, the diodes 120 and 150 are PN diodes, i.e. diodes formed in a semiconductor substrate, or Schottky diodes.

Figure 2 represents an embodiment of a protection circuit 200.

The circuit 200 of Figure 2 is similar to the circuit 100 of Figure 1 except that the diode 150 has its anode connected to the anode of another TVS 216. The TVS 216 has its cathode connected to the node N1. In this example, the anode of the diode 150 is therefore disconnected from the node N3.

In an example, the avalanche voltage of the TVS 116 is lower than the avalanche voltage of the TVS 216 in order to first turn on the transistor 102 and then allow a fast response. This condition allows to activate TVS 116 in first in order for the active clamp to work first and to insure a voltage across the transistor 102 which is inferior the its maximum rating (AMR).

In an example, TVS 116 and 216 comprise two or more TVS in series.

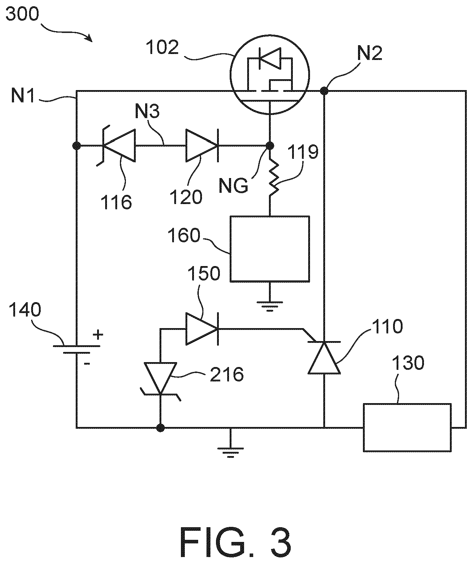

Figure 3 represents an embodiment of a protection circuit 300.

The circuit 300 of Figure 3 is similar to the circuit 200 of Figure 2 except that the TVS 216 has its cathode connected to ground in order to get a trade-off between the TVS breakdown voltage and the response time to enable the active clamp and the thyristor (or triac).

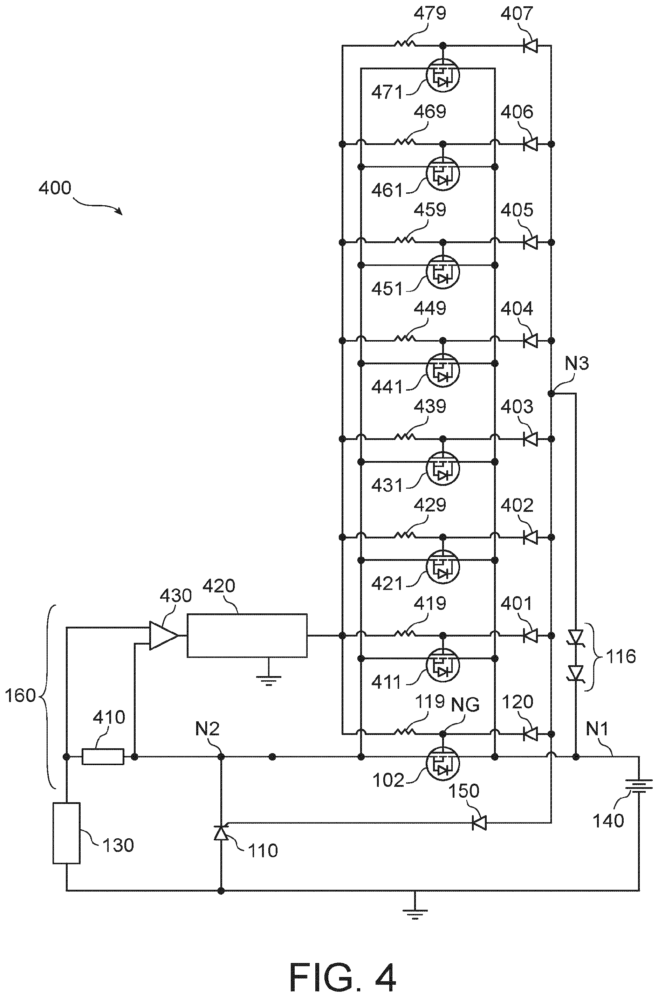

Figure 4 represents an embodiment of a protection circuit 400. The circuit 400 of Figure 4 is similar to the circuit 100 of Figure 1 except that instead of having only one transistor 102, a plurality, for example eight, transistors 102, 411, 421, 431, 441, 451, 461, 471, are arranged in parallel with their conducting nodes connected to the node N1 and respectively N2. Each transistor 102, 411, 421, 431, 441, 451, 461, 471 of the plurality has its controlling node, i.e. its gate, coupled to the node N3 through a diode 401, 402, 403, 404, 405, 406, 407, for example similar to the diode 120. In this example, the cathode of the diodes 120, 401, 402, 403, 404, 405, 406, 407 are connected to the controlling node of the respective transistor 102, 411, 421, 431, 441, 451, 461, 471.

Each transistor 102, 411, 421, 431, 441, 451, 461, 471 of the plurality has its controlling node, i.e. its gate, coupled to the driver circuit 160 via a respective resistor 119, 419, 429, 439, 449, 459, 469, 479.

In the represented example, the TVS 116 comprises two TVS in series.

In the example of Figure 4, the driver circuit comprises a shunt resistor 410, connected in series between the load 130 and the node N2. The voltage or the current across the shunt resistor 410 is monitored by an amplifier 430. When the current or voltage sensed is higher than a threshold for example, the amplifier output signal state is changed. A gate driver 420 of the driver circuit 160, in return, turns-off the transistors by changing the voltage applied to their controlling nodes.

In an example, the gate driver 420 is comprised in an integrated circuit.

The field of application of the protection circuits described are for example automotive, for example electrical vehicle charging or on-board chargers (OBC). Uninterruptible power supplies (UPS) or industrial power supplies are also concerned by the use of the protection circuits described. The field of application also concerns converters circuits DC-DC or AC-DC or electronic functions to supply a load or to charge a battery. Moreover, the described protection circuits may be implemented in power trains, motor control, induction heating or photovoltaic modules control.

As a general feature, the described protection circuits may be used in applications that deal with high voltages for example few hundreds of volts.

Various embodiments and variants have been described. Those skilled in the art will understand that certain features of these embodiments can be combined and other variants will readily occur to those skilled in the art. Preferably, the controllable rectifying arrangement comprises only one thyristor, or only one triac in series with only one diode.

Finally, the practical implementation of the embodiments and variants described herein is within the capabilities of those skilled in the art based on the functional description provided hereinabove. In particular, the driver circuit can be implemented by the person of the art in different ways as long as, when an overcurrent or over-voltage occurs in the circuit, the driver circuit will apply a voltage to the transistor controlling node such that the transistor is deactivated when the over-current or over-voltage is sensed. The person of the art will also adapt the voltage applied to the transistor as regards the type of transistor involved.

## Claims

1. Protection circuit (100, 200, 300, 400), comprising:
- at least one transistor (102) having one first conduction node connected to a first node (N1) and one second conduction node connected to a second node (N2), the first node (N1) being configured to be connected to a power source (140) referenced to ground, and the second node (N2) being configured to be coupled to a load (130) referenced to ground;
- one driver circuit (160) coupling a control node (NG) of said at least one transistor to ground, and being configured to deactivate said at least one transistor (102) when an overvoltage or an overcurrent occurs;
- at least one first transient voltage suppressor diode (116) having its anode connected to a third node (N3) and its cathode coupled to the first node (N1);
- at least one second diode (120) having its anode connected to the third node (N3) and its cathode connected to the controlling node of said at least one transistor (102);
- a controllable rectifying arrangement coupling the second node (N2) to ground; and
- a third diode (150) having its cathode connected to a controlling node of the rectifying arrangement.

2. Protection circuit according to claim 1, wherein the controllable rectifying arrangement is made of at least one thyristor.

3. Protection circuit according to claim 1, wherein the controllable rectifying arrangement is made of at least one triac in series with at least one reversed-biased diode.

4. Protection circuit according to any of claims 1 to 3, wherein the third diode (150) has its anode coupled to the third node (N3).

5. Protection circuit according to any of claims 1 to 4, wherein the protection circuit comprises at least one second transient voltage suppressor diode (216), the anode of the third diode (150) being connected to the first transient voltage suppressor diode (116) or to said second transient voltage suppressor diode (216).

6. Protection circuit according to claim 5, wherein said at least one second transient voltage suppressor diode (216) has its cathode connected to the first node (N1).

7. Protection circuit according to claim 6, wherein the avalanche voltage of the first transient voltage suppressor diode (116) is lower than the avalanche voltage of the second transient voltage suppressor diode (216).

8. Protection circuit according to claim 5, wherein said at least one second transient voltage suppressor diode (216) has its cathode connected to ground.

9. Protection circuit according to any of claims 1 to 8, comprising a plurality of transistors (102, 411, 421, 431, 441, 451, 461, 471) having each:
- one conduction node connected to the first node (N1); and
- one conduction node connected to the second node (N2) ;
the controlling nodes of the transistors of the plurality being coupled together.

10. Protection circuit according to claim 9, further comprising a plurality of second diodes (120, 401, 402, 403, 404, 405, 406, 407) having each their anode connected to the third node (N3) and their cathode connected to the respective control node of the transistors of the plurality.

11. Protection circuit according to claim 8 or 9, wherein said at least one transistor or the plurality of transistors are of the MOSFET or IGBT type.

12. Protection circuit according to claim 3 and any of claims 4 to 11, wherein said first or second transient voltage suppressor diodes (116, 216) comprise two transient voltage suppressor diodes in series.

13. Protection circuit according to any of claims 1 to 12, wherein the avalanche voltage of the first transient voltage suppressor diode (116) is superior to the power supply voltage (140).

14. Protection circuit according to any of claims 1 to 13, wherein the protection circuit (100, 200, 300, 400), comprises several transistors (102) having each one first conduction node connected to the first node (N1) and one second conduction node connected to the second node (N2); said driver circuit (160) being configured to deactivate every of said transistors (102) when an overvoltage or an overcurrent occurs.

15. Power conversion circuit comprising:
- a power source (140) referenced to ground;
- a load (130) referenced to ground;
- the protection circuit according to any of claims 1 to 14, wherein the first node (N1) of the protection circuit is connected to the power source and the second node (N2) of the protection circuit is connected to the load.

16. Vehicle comprising:
- a power source (140) referenced to ground;
- a load (130) referenced to ground;
- the protection circuit (100, 200, 300, 400) according to any of claims 1 to 14, wherein the first node of the protection circuit is connected to the power source and the second node of the protection circuit is connected to the load.

17. Power conversion circuit according to claim 13 or vehicle according to claim 14, wherein the load is a battery to charge.

18. Method of using the protection circuit (100, 200, 300, 400) according to any of claims 1 to 14, comprising the use of the controllable rectifying arrangement and the transient voltage suppressor diode (116) to dissipate energy when an over-voltage or over-current occurs.
